(19) Europäisches Patentamt
European Patent Office
Office européen des brevets

(11) EP 4 715 659 A1

(12) EUROPEAN PATENT APPLICATION

(43) Date of publication:
25.03.2026 Bulletin 2026/13

(21) Application number: 24202228.3

(22) Date of filing: 24.09.2024

(51) International Patent Classification (IPC):
G06F 30/23 (2020.01)    H02P 9/00 (2006.01)
G06F 119/10 (2020.01)    G06F 119/14 (2020.01)

(52) Cooperative Patent Classification (CPC):
G06F 30/23; H02P 29/50; G06F 2119/10;
G06F 2119/14

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: TOYOTA JIDOSHA KABUSHIKI
KAISHA
Aichi-ken, 471-8571 (JP)

(72) Inventors:
• LAES, Dieter
  1140 BRUSSELS (BE)
• BLOCKMANS, Bart
  1140 BRUSSELS (BE)

(74) Representative: Cabinet Beau de Loménie
103, rue de Grenelle
75340 Paris Cedex 07 (FR)

Remarks:
Amended claims in accordance with Rule 137(2)
EPC.

(54) **METHOD FOR OBTAINING AN ELECTRIC MACHINE, THE METHOD INVOLVING MODAL ANALYSIS OF ROTOR-STATOR INTERACTION**

(57)    Obtaining an electric machine comprising concentrically arranged stator and rotor with a computer-implemented prediction of an Eigenfrequency for each of sets of specifications representing material and geometry options for the stator, including
- solving the Eigenvalue problem with a finite element solver, an input of which includes a mass matrix and a stiffness matrix, the stiffness matrix comprising equivalent material parameters of a laminar 3D structure with a sub-structure periodically occurring with periodicity around a central axis in the 3D structure from a laminar element with repeated occurrence of the laminar element along the central axis, and elements/tuples
- relating an average or an interpolation of coefficients of deformation within constraints to volume portions of the 3D structure to provide representative volume elements and
- computed with the periodicity and model order reduction with proper orthogonal decomposition on tuples representing the sub-structure.

FIG. 11

**Description**

BACKGROUND OF THE INVENTION

1. Field of the invention

The present disclosure relates to a method for obtaining an electric machine comprising a computer-implemented prediction of an Eigenfrequency for each of sets of specifications representing material and geometry options for a component of the machine formed from a laminar element into a laminate with repeated occurrence of the laminar element a use of a computer program for and of a functional data structure in the computer-implemented prediction.

2. Description of Related Art

Finite element models (FE models) are a known engineering tool to predict or simulate properties and behavior of products in certain scenarios. Literature [2] to [6] deal with FE models for perfectly laminated stacks forming a stator core of an electric engine or generator. Literature [1] teaches generating an FE model of a stack forming a stator core, wherein representative volume elements (RVE) are determined to represent sections of the stack as an orthotropic material and identifying representative volume elements includes identifying representative volume elements of for a set of load cases to reflect at least two of vertical, lateral and shear deformation scenarios of the sub-structure. Literature [3] teaches a homogenization of the FE model of a stack for simplifying modelling in a numeric manner. Like Literature [1] Literature [7] to [9] indicate contact modelling concepts for a section of a stack forming a stator core, wherein Literature [7] reflects load cases for the section. Literature [10] and [11] show approaches to calculate stiffness for a model based on contact laws and Literature [1] discusses how an appropriate contact law can be identified with sample measurements, specifically compression measurements. Further modelling concepts for at least a section of a stack forming a stator core are shown in Literature [12] and [16].

Literature

[1] Baloglu, M. V. (2021), Identifikation eines Materialmodells geschichteter Blechpakete im Rahmen einer Zwei-Skalen-Modellierung (doctoral dissertation, Friedrich-Alexander-Universität Erlangen-Niirnberg (FAU)).
[2] Baloglu, M. V., Ziegler, M., Franke, J., & Willner, K. (2020), Determination of equivalent transversely isotropic material parameters for sheet-layered lamination stacks, Mechanical Systems and Signal Processing, 145, 106915.
[3] Baloglu, M. V., & Willner, K. (2016), Material modelling of a sheet-layered lamination stack by homogenization, PAMM, 16(1), 509-510.
[4] Baloglu, M. V., & Willner, K. (2018), Constitutive modelling of sheet-layered lamination stacks, PAMM, 18(1), e201800162.
[5] Baloglu, M. V., & Willner, K. (2018, December), Influence of the constitutive contact law on the anisotropic material parameters of sheet-layered lamination stacks, 2018 8th International Electric Drives Production Conference (EDPC) (pp. 1-6).
[6] Baloglu, M. V., & Willner, K. (2021), Identifying equivalent transversely isotropic material parameters for full-surface bonded sheet-layered lamination stacks, PAMM, 20(1), e202000109.
[7] Baloglu, M. V., & Willner, K. (2016, November), Numerical homogenization and simulation of a lamination stack, 2016 6th International Electric Drives Production Conference (EDPC) (pp. 67-72).
[8] Luchscheider, V. (2016), Experimentelle und numerische Identifikation eines homogenisierten Materialmodells für Blechpakete elektrischer Maschinen (doctoral dissertation, Friedrich-Alexander-Universität Erlangen-Niirnberg (FAU)).
[9] Luchscheider, V., Willner, K., & Maidorn, M. (2014, September), A material model for lamination stacks based on rough contacts, 2014 4th International Electric Drives Production Conference (EDPC) (pp. 1-6).
[10] Luchscheider, V., Maidorn, M., & Willner, K. (2014, July), Computation of the effective lamination stack's behavior considering the contact simulation with a multi-scale homogenization, Proceedings of the 11th World Congress on Computational Mechanics.
[11] Luchscheider, V., Willner, K., & Maidorn, M. (2012, October), Development of a model to describe the stiffness of an electric motor lamination stack, 2012 2nd International Electric Drives Production Conference (EDPC) (pp. 1-5).
[12] Millithaler, P. (2015) Dynamic behaviour of electric machine stators, Modelling guidelines for efficient finite-element simulations and design specifications to reduce noise, PhD dissertation, Univ. Franche-Comté.
[13] Millithaler, P., Sadoulet-Reboul, É., Ouisse, M., Dupont, J. B., & Bouhaddi, N. (2015), Structural dynamics of electric machine stators: Modelling guidelines and identification of three-dimensional equivalent material properties for multilayered orthotropic laminates, Journal of Sound and Vibration, 348, 185-205.

[14] Molina, A. J. C. (2007), Computational homogenization for multi scale finite element simulation, Swansea University (United Kingdom).

[15] Miehe, C. (2003), Computational micro-to-macro transitions for discretized micro-structures of heterogeneous materials at finite strains based on the minimization of averaged incremental energy, Computer methods in applied mechanics and engineering, 192(5-6), 559-591.

[16] Nguyen, V. D. (2014), Computational homogenization of cellular materials capturing micro-buckling, macro-localization and size effects, PhD dissertation.

Computer programs for FE analysis or FE model calculations are known from the open source development NASTRAN. The SMART Engineering GmbH, 21244 Buchholz, Germany, commercially offers NASTRAN-based software tools to predict or simulate properties and behavior of products in certain scenarios with FE modelling. A further known tool for numeric computing and related to FE models is MATLAB. A '.bdf file' is a known format for storing an FE model.

A conventional method for obtaining an electric machine comprising concentrically arranged first and second electromagnetic components for a conversion between mechanical and electric energy being a rotor and a stator, comprises

- selecting one of sets of specifications representing options for the first electromagnetic component, selected from at least of material, geometry, and assembling options in view of noise/vibration performance and related interferences between a Eigenfrequency incurred by a selected set and a response frequency of the second electromagnetic component, and
- assembling the electric machine using the second electromagnetic component and options for the first electromagnetic component corresponding to the selected set of specifications. A demand still exists for a technically efficient obtaining of the electric machine in such a scheme, in particular based of a technical improvement and practically usable selecting operation with an automated Eigenfrequency prediction in such a scheme.

SUMMARY

It is an object of the present invention to make use of FE modelling concepts which also may include aspects of the above known FE modelling concepts in order to allow efficiently obtaining an electric machine of excellent noise vibration performance. Under another aspect the present disclosure also allows offering a technically efficient interface on a (compression) measurement device so that an analyzer or simulation portion of a system may be coupled to the interface for interacting with measurements by the measurement device. The analyzer or simulation portion may particularly be one for identifying resonant frequencies of modes at which standing waves of structures, particularly laminar elements in a stack are observed, to enhance usefulness of a measurement device in a system for predicting deformations, in particular vibrations. Under another aspect the present invention allows an efficient FE modelling implementation in particular for a stator core laminate.

According to the invention a method for obtaining an electric machine comprising concentrically arranged first and second electromagnetic components for a conversion between mechanical and electric energy being a rotor and a stator, the method comprises

- a computer-implemented prediction including a prediction of an Eigenfrequency for each of sets of specifications representing options for the first electromagnetic component, selected from at least of material, geometry, and assembling options,
- a vibration analysis for determining interferences between each Eigenfrequency of the prediction and a response frequency of the second electromagnetic component,
- a selection of a set of specifications among said sets of specifications based on said vibration analysis, the selected set of specifications corresponding to an Eigenfrequency of the prediction for which suppressed interference is determined in said vibration analysis,
- assembling the electric machine using the second electromagnetic component and options for the first electromagnetic component corresponding to the selected set of specifications,

wherein the computer-implemented prediction is based on and/or includes

- solving the Eigenvalue problem with a finite element solver, an input of which includes a mass matrix and a stiffness matrix and outputs of which include the prediction of the Eigenfrequency for each of the sets of specifications,

- providing for each of the sets of specifications a data structure containing the mass matrix and the stiffness matrix which comprise equivalent material parameters of a 3D structure formed as a laminate from a laminar element with repeated occurrence of the laminar element along the central axis and with periodicity around a central axis according to a sub-structure periodically occurring in the 3D structure,

wherein elements of the stiffness matrix are tuples

- relating an average or an interpolation of coefficients of deformation within constraints and in response to force increments at contacts between adjacent ones of the laminar element in the 3D structure to volume portions of the 3D structure to provide representative volume elements for a section-based representation of the 3D structure as an orthotropic material and
- computed with the periodicity and model order reduction with proper orthogonal decomposition on finite element or respective tuples representing the sub-structure. The concentrical arrangement of the first and second electromagnetic components is an arrangement with regard to the central axis. The 3D structure is in particular a stator core to which a coil may be added to from a stator of the electric machine.

The electrical machine may be an electric motor and/or an electric generator. The finite element solver is a computer program unit or a combination of the computer program unit and hardware for executing a computer program unit's instructions and to output the outputs by this hardware. A commercial finite element solver may be used for the invention. As far as consistent with the method according to the invention the representative volume elements may be obtained with concepts of homogenization and simplification shown in the Literature cited above. As far as consistent with the method according to the invention the tuples representing the sub-structure may be obtained with finite element modelling concepts shown in the Literature cited above. The options for the first electromagnetic component are those selected from at least one of material, geometry, and assembling options. A material option is a particular e-steel of a laminar element of a stator or rotor, in particular an e-steel obtained from a specific processing and/or with a specific surface roughness. An assembling option the kind of providing a core of a stator or rotor with a coil, in particular by adding hairpins. An assembling option may then be a kind of hairpin used and/or a process of adding the hairpin to produce the stator or rotor. The sets of specifications may be represented by product identifiers.

The invention offers efficiency, particularly computation resource efficiency and related noise vibration performance results by specifically handling a data structure which is based on combined measures of the substructure related to and/or used for performing the proper orthogonal decomposition, the representative volume elements and the periodicity as a basis for matrix elements or obtaining matrix elements, in particular matrix elements of a stiffness matrix for a finite element solver.

The computer-implemented prediction may include a prediction of an Eigenvector and the outputs of the finite element solver include the prediction of the Eigenvector. Within the meaning of the description the Eigenvector may a matrix having vectors as its elements.

For the sake of efficiency, the computer-implemented prediction reflects a rotation around the central axis as the only degree of freedom of the laminar element. Alternatively it may reflect a selected set of degrees of freedom, including the laminar element and preferably consisting of between 2 and 5 degrees of freedom.

The first electromagnetic component is a stator, the second electromagnetic component may be a rotor, and the 3D structure a core of the stator and the sub-structure may comprise a tooth for carrying a coil or coil portion of the stator.

The representative volume elements are preferably representative volume elements of a set of load cases to reflect at least two of vertical, lateral and shear deformation scenarios of the sub-structure. A stiffness matrix of a laminate quantifies the in-plane stiffnesses resulting from inter lamina-contacts which themselves involve non-linear relations between force and deformation (as a function of the contact pressure). In the invention the representative volume elements (RVE) used are associated with matrix coefficients, in particular of a stiffness matrix, which reflect linear relations between force and deformation. However, an arrangement/a region-specific definition (associating with specific matrix coefficients) of the representative volume elements is used to properly quantify (region-specific matrices) the in-plane stiffnesses resulting from inter-laminar contacts which themselves involve non-linear relations between force and deformation. Thus, sets of RVE are defined for an efficient model and related prediction.

Preferably the method according to the invention comprises establishing elements of the mass matrix (optionally also the elements of the stiffness matrix) which includes computing from the periodicity and model order reduction with proper orthogonal decomposition on finite elements or respective tuples of a finite element model representing the sub-structure and defining the contacts, wherein the model order reduction may comprise an iterative determination with a calculation of a Jacobian.

Further computer-implemented operations of the method according to the invention are optionally

- defining and/or identifying association between the representative volume elements and stiffness coefficients, and

- providing the data structure with the equivalent material parameters by defining volume portions of the sub-structure with said representative volume elements and defining volume portions of the structure with the volume portions of the sub-structure and the periodicity.

The contacts (between adjacent ones of the laminar element) based on which the tuples are obtained are e.g. node to node or node to surface contacts. Using an analytical contact Jacobian as a pre-established analytical contact Jacobian to reflect these contacts and without prior iterative analytical contact Jacobian determination can contribute to efficiently obtaining an electric machine.

The finite element model preferably comprises nodes classified according to portions of the tooth and to positions along a dimension of the center axis, and comprises boundary conditions which include Signorini conditions.

The tuples representing the sub-structure may include coefficients of a function which is a power function or an exponential function (and accordingly a contact law is defined) and preferably the coefficients of the function are coefficients from sampled/measured tuples among the tuples with an offset correction and preferably obtained from a division of measured parameter values by the number of repeated occurrence of the laminar element in a measurement on the first electromagnetic component minus 1 to obtain inter-laminar contact specific values. Then the measurement can also be a measurement of averaged stress-compression curves for a set of load cycles.

Further aspects of the invention are a use of a computer program comprising instructions for executing the computer-implemented prediction in the method according to the invention and a use of a functional data structure for the providing of the mass and the stiffness matrix in the method according to the invention, the functional data structure comprising

for a set of specifications, the mass matrix and the stiffness matrix which comprise equivalent material parameters of the 3D structure formed from the laminar element and the periodicity around the central axis, wherein elements of the stiffness matrix are tuples

- relating an average or an interpolation of coefficients of deformation within constraints and in response to force increments at contacts between adjacent ones of the laminar element in the 3D structure to volume portions of the 3D structure to provide representative volume elements for a section-based representation of the 3D structure as an orthotropic material,
- wherein the tuples are computed from the periodicity and model order reduction with proper orthogonal decomposition on tuples representing the sub-structure.

For obtaining coefficients used in the method of the invention it is possible to execute a method for obtaining equivalent material parameters of a 3D structure, like e.g. a core of a stator, formed from a laminar element into a laminate with repeated occurrence of the laminar element along one dimension of the structure, comprising measuring by a measurement device tuples of shape and force parameters of stacks of the laminar element in response to the force increments (e.g. recording and averaging stress-compression curves for a set of load cycles and a set of stacks), and a computer-implemented processing of the tuples output from the measurement device with operations of

- identifying from the tuples, optionally from sampled tuples among the tuples and/or with an offset correction, a set of coefficients of a function (e.g. selected from a linear function, a quadratic function, a cubic function, a general power law function, an exponential function, an exponential Baloglu function, as shown in Literature [1] and a logistic function, preferably a cubic function, a general power law function), with the parameters and for contacts, like e.g. node to node or node to surface contacts, between adjacent ones of the laminar element in the stacks. It is possible to
- provide a finite element model of a sub-structure occurring in said 3D structure with a periodicity, like e.g. a tooth for carrying a coil or coil portion of the stator, which represents a force distribution in the sub-structure based on the set of coefficients, and/or
- identify representative volume elements to represent sections of the stacks as an orthotropic material.

The set of coefficients may be identified with an iterative determination of a Jacobian with an iterative reduction of a difference between a measured and a corresponding predicted compression (penalty-based determination) or a division of measured parameter values by the number of repeated occurrence of the laminar element in the measured stack minus 1 to obtain inter-laminar contact specific values. For identifying the set of coefficients, also a method known as GMRES may be used as an iterative concept.

Identified representative volume elements may be representative volume elements of a set of load cases to reflect at least two of vertical, lateral and shear deformation scenarios of the sub-structure. This corresponds to load case specific descriptions of force and deformation relationships, in particular stress to volume change or stress to dimension change relationships or a relationship corresponding to Hook's law. Such descriptions are disclosed in Literature [1] to which reference is made for describing representative volume elements may include identifying representative volume elements of specific load cases.

Above-mentioned coefficients may be used in FE model homogenizations as disclosed in Literature [1]. Specifically, Literature [1] describes for this purpose an analytical and a numeric homogenization. This numeric homogenization, which is based on the representative volume elements may be used in the invention for the identifying representative volume elements to represent sections of the stacks as an orthotropic material, and/or the providing a data structure with the equivalent material parameters by defining volume portions of the sub-structure with said representative volume elements and defining volume portions of the structure with the volume portions of the sub-structure and the periodicity.

BRIEF DESCRIPTION OF THE DRAWINGS

In what follows symbols for variables or matrices are (unless otherwise specified) used in accordance with notations commonly used in the field of finite element models, finite element analysis and in the field of the invention. Features, advantages, and technical and industrial significance of exemplary details, features and embodiments of the invention will be described below with reference to the accompanying drawings, which in particular show measures and concepts to obtain a data structure involved and/or used in the method according to the invention and in which like signs denote like elements, and wherein:

- FIG. 1 schematically illustrates a sub-structure's shape and dimensions and FIG. 2 its nodes, the sub-structure comprising a tooth portion of a stator;
- FIG. 3A illustrates simulated Eigenmodes of deformation of a laminar sub-structure;
- FIG. 3B illustrates a process of simplifying a simulation of Eigenmodes of deformation of a laminar sub-structure;
- FIG. 4 illustrates schematically a portion of a stator;
- FIG. 5 and 6 illustrate schematically alternative kinds of processing of tuples from compression measurements, wherein an option of establishing a contact Jacobian is shown in Fig. 5;
- FIG. 7 illustrates an exemplary processing of tuples in the invention's method;
- FIG. 8A schematically illustrates a representative volume element (RVE);
- FIG. 8B schematically illustrates a laminar element also called lamina being a constituent of the representative volume element (RVE);
- FIG. 9 illustrates schematically load cases or related deformations of a volume element as shown in FIG. 8A;
- Figs. 10A to 10E illustrate force, coefficient, and dimension parameters for various load cases and related functions;
- FIG. 11 schematically illustrates a method of the invention and related interactions; and
- FIG. 12 schematically illustrates a Newton-Raphson scheme based numeric operation.

DETAILED DESCRIPTION

**Basic FE modelling**

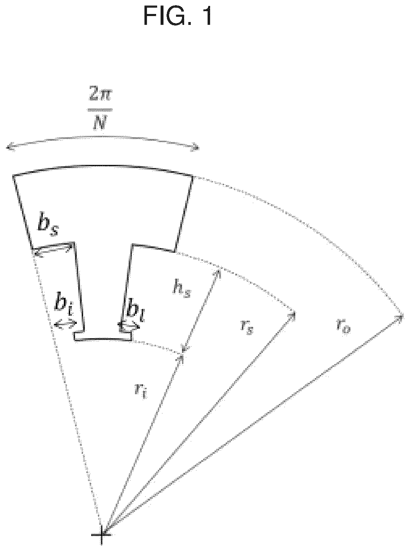

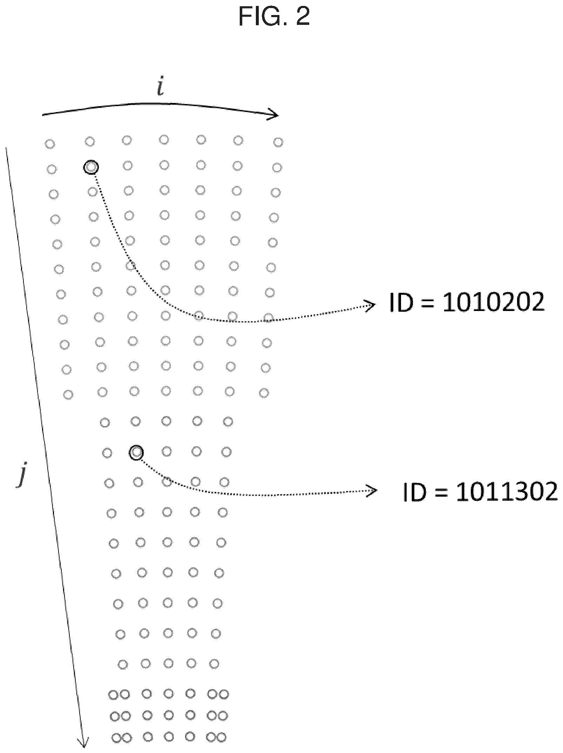

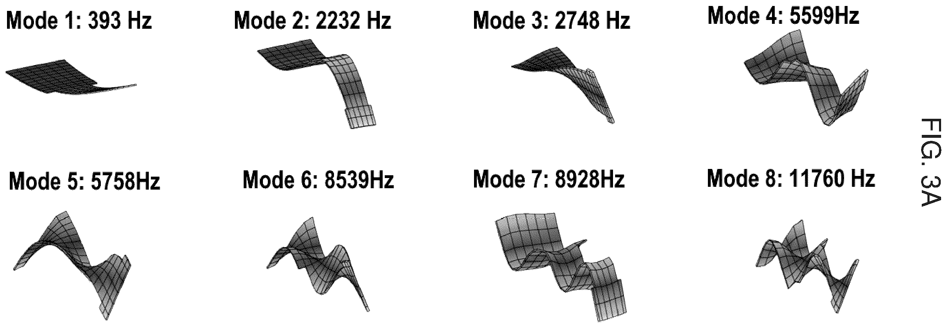

FIG. 1 illustrates schematically a stator core's sub-structure comprising a tooth for carrying a coil portion of the stator, N adjacent ones of these sub-structures forming the stator core's laminar element (lamina) or its simplification. Parameters defining the sub-structure some of which are indicated in FIG. 1 are a tooth number N, an outer radius $r_0$, an inner radius $r_i$, a slot radius $r_s$, a half slot width at slot diameter, a half slot width at inner diameter, a slot height $h_s$, a lip width, and a lamina thickness. Specifically, a stator's structure may be described with the following input geometry parameters, some of which are illustrated in FIG. 1: a number of laminar elements in a stack Nt, a number of teeth N in the stack, an inner diameter di = 2 times $r_i$, an outer diameter do = 2 times $r_o$, a slot diameter ds = 2 times $r_s$, a slot width $b_s$, an inner diameter of the slot $b_i$, a height of the slot $h_s$, a lip width $b_l$, a thickness t of each laminar element. Furthermore, a .dxf file may be used to describe the stator's structure/geometry including outer in inner contours like bolt holes. As illustrated by FIG. 2 a node mesh may be used to represent the sub-structure delimited by boundary nodes and with node IDs defined as ID = t*1e4 + i * 1e2 + j, with t = tooth number, I = row number, and j = column number, and different coarseness of the node mesh for different portions of the sub-structure. Lines for and densities of arranging the nodes or finite elements may be defined with finite element model input parameters including a mesh type defining a number of finite element parameters, a number of finite elements in the thickness direction of a laminar element, numbers of finite elements in the lip, the radial and the tangential directions, numbers of finite elements in the slot, the radial and the tangential direction, a numbers of finite elements in the outer section of the tooth; radial and in the tangential direction, a numbers of finite elements along the thickness in a solid portion of the tooth. A corresponding representation can be implemented in NX NASTRAN offered by SMART Engineering GmbH, 21244 Buchholz, Germany, and related to a reference coordinate system or reference frame to describe node motions or kinetics and thereby deformations of and/or in the sub-structure. Then, in particular based on symmetry of the sub-structure, dependent degrees of freedom may be eliminated so as to describe node motions or kinetics and thereby deformations of and/or in the sub-structure within motion constraints or, more specifically, algorithmic boundary conditions primarily or only based on independent degrees of freedom. FIG. 3A illustrates Eigenmodes of deformation of a laminar sub-structure as schematically illustrated in FIG. 1 and 2. Here, the corresponding finite element model with aforementioned aspects comprises nodes classified according to portions of the tooth and to positions along a dimension in which lamina of the stator are stacked onto each other, and comprises boundary conditions which include Signorini conditions so as to involve a known penalty-based contact constraint setting in FE modelling.

Specifically, boundary conditions specifications may be set to specify

- constraints

    o in the form of algebraic constraint equations or
    o (directly) in a stiffness matrix of the finite element model,

- for a lowermost laminar element of the stack one the following options:

    o a deformation calculation with the external pressure is applied to the top and bottom
    o a deformation calculation with a multipoint constraint constraining all displacements in z-direction
    o a deformation calculation within a contact zone extending across the whole laminar element
    ∘ a deformation calculation within a contact zone is the same as the load zone in the topmost laminar element of the stack,

- a constraint that links the elastic laminar element to its floating frame of reference with

    ∘ a flexible multipoint constraint on subset of nodes within a load zone (which is a preference constraint)
    ∘ a flexible multipoint constraint on all nodes
    ∘ a rigid multipoint constraint on subset of nodes within load zone
    ∘ a rigid multipoint constraint on all nodes,

- the location of the condensation node of the rigid or flexible multipoint constraint (resulting in the correct torsional Eigenmode shapes, e.g. located at the mean position of all the interface nodes or located at the center of gravity location).

Also, a physical-parameter-based contact constraint setting in FE modelling is available, as described e.g. in Literature [15].

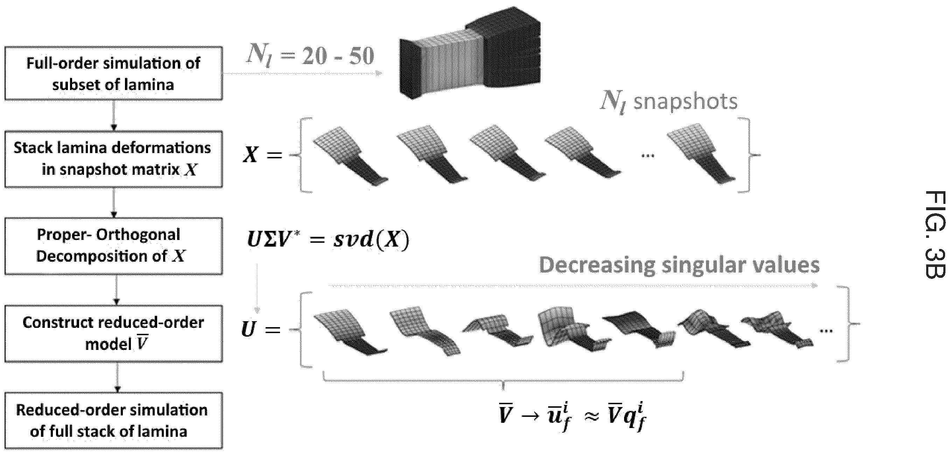

As described, a sub-structure-based concept for a simulation of a subset of lamina in the stack simplifies simulation and as shown in FIG. 3B, it may define intra-stack deformations with a snapshot matrix for 20 to 50 deformed lamina. As shown in FIG. 3B, this snapshot matrix result may be subjected to orthogonal decomposition and reduced-order model construction in particular with above-indicated elimination of dependent degrees of freedom which further simplifies a simulation.

Known and suitable contact detection algorithms can be classified into ones detecting node to node, node to surface, and surface to surface contacts. It is preferred that the contacts associated in the invention with the identified coefficients are node to node or node to surface contacts.

**Tuple processing**

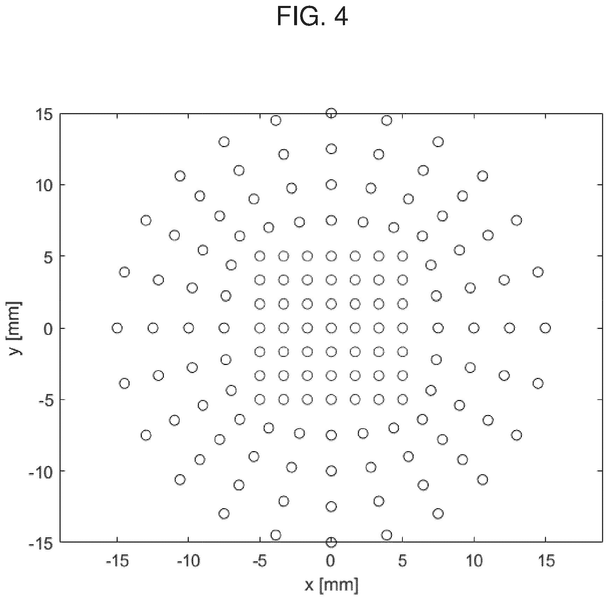

The identifying a set of coefficients may include an iterative determination of a Jacobian with an iterative reduction of a difference between a measured and a corresponding predicted compression (penalty-based numeric FE modelling). For this purpose and as illustrated by FIG. 4, a node mesh may be used to represent a portion, specifically a laminar element of a stator, delimited by boundary nodes, and with different mesh coarseness formed by the nodes for different portions. A corresponding representation can be implemented in NX NASTRAN offered by SMART Engineering GmbH, 21244 Buchholz, Germany, and related to a reference coordinate system or reference frame to describe node motions or kinetics and thereby deformations. The iterative determination reduces differences between values obtained from e.g. measured tuples or coefficients identified from measured tuples and values from an FE model using the coefficients and the node mesh. An iterative determination reduces differences in this sense is e.g. shown in Literature [8].

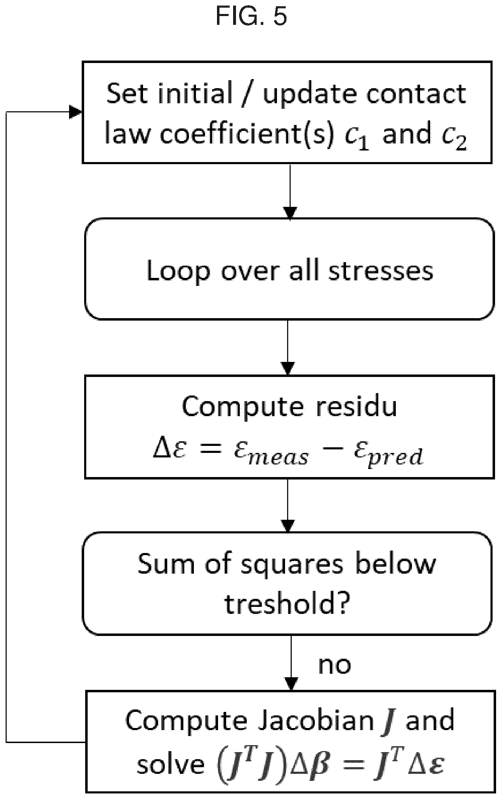

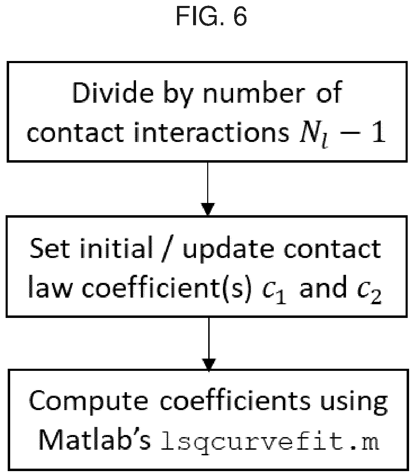

As indicated above, identifying from measurement tuples a set of coefficients of a function with the parameters and for contacts between adjacent ones of the laminar element in stacks and alternative approaches may be used for this purpose. Specifically, in a sense of a contact analysis-based curve fit to the measured tuples an iterative determination of a Jacobian with an iterative reduction of a difference between measured and corresponding predicted compression values is illustrated in FIG. 5, and in a sense of a direct curve fit to the tuples a division of measured parameter values by the number of repeated occurrence of the laminar element in the measured stack minus 1 to obtain inter-laminar contact specific values is possible and illustrated in FIG. 6.

The processing illustrated in FIG. 5 involves calculations based on meshes as illustrated in FIG. 4. Measurements are conducted with different stacks

- of different numbers **n** of contact law model parameters and
- at **m** different pressures/stresses applied onto these stacks and parameters and coefficients are those known from Hook's law in common compressive strength measurements. The following features are involved in the processing illustrated in FIG. 5 and applied to a numeric Jacobian matrix calculation with the following specifications:

◦ m measurement points:

$$(\sigma_1, \varepsilon_1), (\sigma_2, \varepsilon_2), \ldots, (\sigma_m, \varepsilon_m)$$

◦ Model function: $\hat{\varepsilon} = f(\sigma, \beta)$ with $\beta = (\beta_1, \beta_2, ..., \beta_n)$ model parameters (n < m)
◦ Residual:

$$r_i = \varepsilon_i - \hat{\varepsilon}_i = \varepsilon_i - f_i(\sigma_i, \boldsymbol{\beta})$$

◦ Sum of squares:

$$S = \sum_{i=1}^{m} r_i^2 \ (i = 1, \ldots, m)$$

o Determination of $\beta$ = setting gradient of sum of squares equal to zero:

$$\frac{\partial S}{\partial \beta_j} = 2 \sum_{i=1}^{m} r_i \frac{\partial r_i}{\partial \beta_j} = 0 \ \ (j = 1, \ldots, n)$$

o Iterative solution of

$$\boldsymbol{\beta} \approx \boldsymbol{\beta}^{k+1} = \boldsymbol{\beta}^k + \Delta \boldsymbol{\beta}$$

o Linearization of the model function $\hat{\varepsilon}$ about $\beta^k$ :

o  Linearization of the model function $\hat{\varepsilon}$ about $\boldsymbol{\beta}^k$:

o Residual in terms of linearized model function:

$$\hat{\varepsilon} = f(\sigma, \boldsymbol{\beta}) \approx f(\sigma, \boldsymbol{\beta}^k) +$$
$$\sum_{i=1}^{m} \frac{\partial f(\sigma, \boldsymbol{\beta}^k)}{\partial \beta_i} = f(\sigma, \boldsymbol{\beta}^k) + \sum_{i=1}^{m} J_{ij} \Delta \beta_j$$

o Substitution in gradient equations:

$$\sum_{i=1}^{m} \sum_{k=1}^{n} J_{ij} J_{ik} \Delta \beta_k = \sum_{i=1}^{m} J_{ij} \Delta \varepsilon_j$$

In matrix notation $(\boldsymbol{J}^T\boldsymbol{J})\Delta\beta = \boldsymbol{J}^T\Delta\varepsilon$
The residual is indicated as $\Delta\varepsilon$ in FIG. 5 and the iteration and resulting coefficient determination is stopped when the sum of squares is determined to be below a preset threshold in the loop shown in FIG. 5.

As shown in FIG. 6, the element (lsqcurvefit.m) of MatLab may also be used to obtain coefficients from tuples. The operation on top of FIG. 6 is a division of measured parameter values (commonly sets of measured parameter values) by the number of repeated occurrence of the laminar element in the measured stack minus 1 to obtain inter-laminar contact specific values, to reflect the fact that a number of contact interfaces between in the stack is lower by one compared to the number of repeated occurrence of the laminar element. In Literature [1] such contact interfaces are discussed as a zero thickness element.

Exemplary functions or contact laws of which coefficients are obtained are a linear function ($\sigma = c1$ (**g**n) ), a quadratic function ($\sigma = c1$ (**g**n)$^2$), a cubic function ($\sigma = c1$ (**g**n)$^3$), and an exponential function ($\sigma = c1$ [$e^{-c2gn}$ - 1)). Preferable are a power function like the cubic function or an exponential function. Further concepts to obtain coefficients from tuples are shown in Literature [5] and [8].

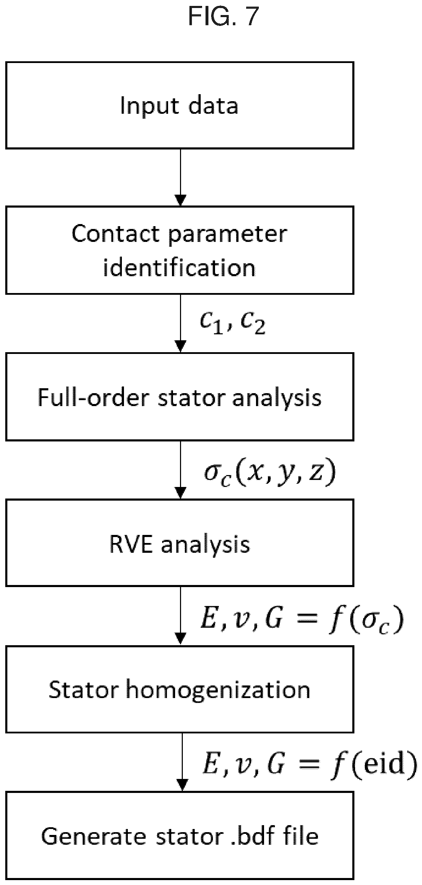

The method elements described above and illustrated in FIG. 5 and 6 can be understood as an operation of contact parameter identification as it is included in the process flow of FIG. 7. FIG. 7 illustrates an exemplary processing of tuples for the invention. As described above, coefficients are obtained in the contact parameter identification. In a subsequent full-order stator analysis the coefficients are associated with nodes of meshes as illustrated in FIG. 4 and at various positions on a z axis and thus associated with 3D positions so as to obtain a spatial FE model. NASTRAN is an available tool for this purpose. As illustrated in FIG. 7, an RVE (representative volume element) analysis is performed for identifying representative volume elements to represent sections of the stacks as an orthotropic material. MatLab is an available tool for this purpose. Here material properties like a Young's modulus E, the shear modulus *G,* bulk modulus *K,* and Poisson's ratio v are expressed as functions of at least some of the obtained coefficients. According to an alternative, the RVE analysis may be performed before the full-order stator analysis. According to an alternative, the identifying representative volume elements may be performed before providing a finite element model. Then the representative volume elements are used for a stator homogenization and MatLab is an available tool for this purpose. Here representative volume elements and related material properties can be associated to nodes or sets of nodes, in particular via node IDs as discussed above in relation to FIG. 2 for an efficient data structure. A .bdf file can thus be made available for a FE software unit and provide a data structure with the equivalent material parameters by defining volume portions of the sub-structure with said representative volume elements and defining volume portions of the structure with the volume portions of the sub-structure and the periodicity.

**Initial tuple generation and processing**

Exemplary measurement settings for the above concept include the following:

|  | settings set 1 | settings set 2 |
|---|---|---|
| lamina (number and thickness) | 5 with 1.25 mm and 10 with 2.5 mm alternately | 20 with 5 mm |
| resulting displacement at 0.05% strain per lamina | 0.625/1.25 micron | 2.5 micron |
| diameter of circular test lamina or area | 30 - 50 mm (surface = 707 - 1963.5 mm$^2$) | 30 - 50 mm (surface = 707 - 1963.5 mm$^2$) |
| minimum required pressure increment | 0.25 MPa, preferably 0.125 MPa | 0.25 MPa, preferably 0.125 MPa |
| tests (test cycles) | 10 loading-unloading cycles per sample | 10 loading-unloading cycles per sample |
| data to record | applied axial pressure (along stacking direction) [MPa] or force [N] + axial displacement [micron] at each load increment | applied axial pressure (along stacking direction) [MPa] or force [N] + axial displacement [micron] at each load increment |

With stacks prepared with numbers of repeated occurrence of the laminar element in the measured stack of 5, 10, 20 and 40, and once without any stack the following sets of measurements are performed to record stress-strain curves with measurement device as used in Literature [8]:

1 measurements with zero lamina: offset determination compression test,
3 measurements with different stacks of 5 lamina, 10 compression cycles,
2 measurements with different stacks of 10 lamina, 10 compression cycles,

2 measurements with different stacks of 20 lamina, 10 compression cycles, and
2 measurements with different stacks of 40 lamina, 10 compression cycles.

Data pertaining to outliers of the recorded curves are discarded, i.e. pertaining to a curve, which significantly differs with its profile from other curves within the measurement set. The computing of averages is performed with the remaining data per set of measurements and offset is corrected by subtracting the result from the measurement without any stack from the computed averages or from each other curve.

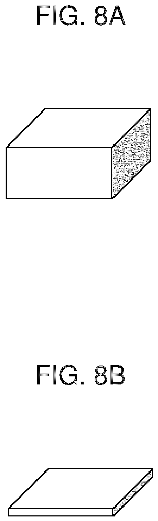

With known elasticity E and thickness t for a material of the laminar element used for a measured stack and the number N of repeated occurrence of the laminar element in the measured stack an elastic compression is computed for the entire laminar element material of the measured stack using the linear Hooke's law: $\varepsilon = dH / H = \sigma / E$ with $H = N * t$. The linear Hooke's law is in particular applicable to the element shown in FIG. 8A. With N-1 being the number of interfaces, the relation $dH_{interface}*(N-1) / dH = 1 - \varepsilon/dH$ is used to compute the elastic compression per interface between the laminar element material. Such interfaces occur in particular upon forming the element shown in FIG. 8A of a plurality of elements shown in FIG. 8B by stacking and/or laminating them onto each other. In Literature [1] such contact interfaces are discussed as a zero thickness element.

These results may be made available in .csv files to be used by a homogenization tool (software unit). With the above parameter/coefficient $\varepsilon$ and $\sigma$ suitable curve fitting functions relating contact stiffness to stress are e.g.

$$\sigma = A\varepsilon^b \;\rightarrow\; \frac{\partial \sigma}{\partial \varepsilon} = bA\varepsilon^{b-1} = b\frac{\sigma}{\varepsilon} = bA^{1/b}\sigma^{\frac{b-1}{b}} = c\,\sigma^{\frac{b-1}{b}} \qquad \text{(power law)}$$

$$\sigma = A(e^{b\varepsilon} - 1) \;\rightarrow\; \frac{\partial \sigma}{\partial \varepsilon} = bAe^{b\varepsilon} \qquad \text{(exponential law)}$$

$$\sigma = \frac{A}{1 + e^{-b(\varepsilon - \varepsilon_0)}} \;\rightarrow\; \frac{\partial \sigma}{\partial \varepsilon} = \frac{Abe^{-b(\varepsilon-\varepsilon_0)}}{[1 + e^{-b(\varepsilon-\varepsilon_0)}]^2} \qquad \text{(logistic function)}$$

$$\sigma = Ae^{b\varepsilon} \;\rightarrow\; \frac{\partial \sigma}{\partial \varepsilon} = bAe^{b\varepsilon} = b\sigma \qquad \text{(Baloglu's exponential function)}$$

For above calculations and operations, the curves are preferably thresholded so that only significant and reliable portions of the curves are used.

**Full-order modelling**

In the process flow shown in FIG. 7 the full-order stator modelling is a preferable feature, which allows the provision of a self-contained tool involving a process flow according to the invention. It allows particularly validating with

a) a static analysis of full-order stack to obtain contact stress distribution throughout the stack
b) a use of contact stress distribution to feed homogenization algorithm and construct heterogenous homogenized FE model
c) modal analysis using linearized full-order stator stack model
d) (linear) modal analysis using heterogeneous homogenized FE model
e) comparing (c) and (d).

Generally, full-order modelling involves a numerical penalty approach or a physical contact law approach.

**Representative volume elements and their relevance**

Representative volume elements and their relevance are described in Literature [1] and [8]. FIG. 8A schematically illustrates a representative volume element (RVE) formed by repeatedly stacking the laminar element shown in FIG.

8B, preferably 5 to 15, more preferably 8 to 12, particularly preferably 10 times this laminar element. According to a particular stacking, the representative volume element (RVE) may have the laminar element divided into two halves which delimit the representative volume element (RVE) and sandwich a stack formed of repetitions of the laminar element shown in FIG. 8B.

Exemplary representative volume element parameters are a length and a width of a representative volume element, a thickness and a number of laminar elements (at least partially located) in a single representative volume element. Exemplary material parameters are a Young's modulus E, a Poisson coefficient v, a shear modulus G and a

density $\overset{Q}{\phantom{.}}$. Exemplary parameters of the finite element model are a mesh type, a mesh coarseness, a number of finite elements along a length, width and across a depth. Exemplary load parameters are stress values to analyze. The material parameters and geometry parameters of laminar elements of a stator may be provided at least partially with a .dxf file. Using such exemplified parameters the following operations may be performed:

- providing a finite element model of representative volume elements created according to the geometry and finite element parameters defined in the structure of representative volume elements,
- importing mass and stiffness matrices of the representative volume element-based finite element model into Matlab (two finite element models are generated: one with equal layers, and one where the upper and lower layer have half the layer width),
- determining the center of gravity of the representative volume element-based finite element model (the center of gravity can optionally be used to offset the nodal coordinates, or to place the condensation degrees of freedom of a flexible multipoint constraint),
- the rigid-body's rotational degrees of freedom of the representative volume element-based finite element model are initially set to zero,
- computing the actual equivalent material parameters (this process is called homogenization, even if no homogenized stator FE model is generated yet).

As an orthotropic material, the representative volume element of FIG. 8A can be described with node specific matrix elements and material parameters as addressed in the description of FIG. 7 with functions as follows:

$$S = \begin{bmatrix} 1/E_1 & -\dfrac{v_{21}}{E_2} & -\dfrac{v_{31}}{E_3} & 0 & 0 & 0 \\ -\dfrac{v_{12}}{E_1} & 1/E_1 & -\dfrac{v_{31}}{E_3} & 0 & 0 & 0 \\ -\dfrac{v_{13}}{E_1} & -\dfrac{v_{13}}{E_1} & 1/E_3 & 0 & 0 & 0 \\ 0 & 0 & 0 & 1/G_{12} & 0 & 0 \\ 0 & 0 & 0 & 0 & 1/G_{13} & 0 \\ 0 & 0 & 0 & 0 & 0 & 1/G_{13} \end{bmatrix}$$

$$E_1 = E_2, E_3, v_{12}, v_{13} = v_{23}, G_{13} = G_{23} \qquad\qquad G_{12} = \frac{E_1}{2 \cdot (1 + v_{12})}$$

$$v_{ij} = \frac{E_i}{E_j} v_{ji}$$

A MAT11 NASTRAN card may be used to correspondingly describe the representative volume element as an orthotropic material.

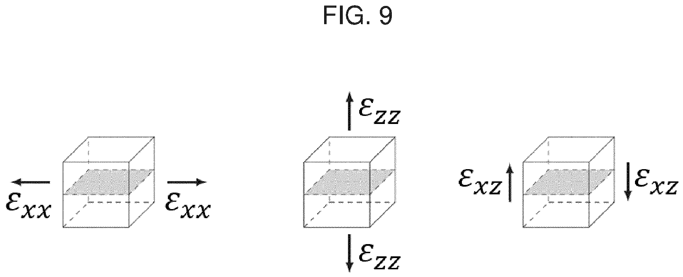

As shown in FIG. 9 and described in Literature [1], several load cases or related deformations of a volume element can be distinguished and thus load case specific coefficients can be defined and determined based on the following case specific functions: Normal stress $\sigma_{xx}$:

$$a. \quad \varepsilon_{xx} = \frac{\sigma_{xx}}{E_x} \quad \rightarrow \quad E_x = \frac{\sigma_{xx}}{\varepsilon_{xx}}$$

$$b. \quad \varepsilon_{yy} = -\frac{\nu_{xy}}{E_x}\sigma_{xx} \rightarrow \nu_{xy} = -\frac{E_x\varepsilon_{yy}}{\sigma_{xx}}$$

$$c. \quad \varepsilon_{zz} = -\frac{\nu_{xz}}{E_x}\sigma_{xx} \rightarrow \nu_{xz} = -\frac{E_x\varepsilon_{zz}}{\sigma_{xx}}$$

Normal stress $\sigma_{zz}$:

$$d. \quad \varepsilon_{zz} = \frac{\sigma_{zz}}{E_z} \quad \rightarrow \quad E_z = \frac{\sigma_{zz}}{\varepsilon_{zz}}$$

Shear stress $\sigma_{xz}$:

$$e. \quad 2\varepsilon_{xz} = \frac{\sigma_{xz}}{G_{xz}} \rightarrow G_{xz} = \frac{\sigma_{xz}}{2\varepsilon_{xz}}$$

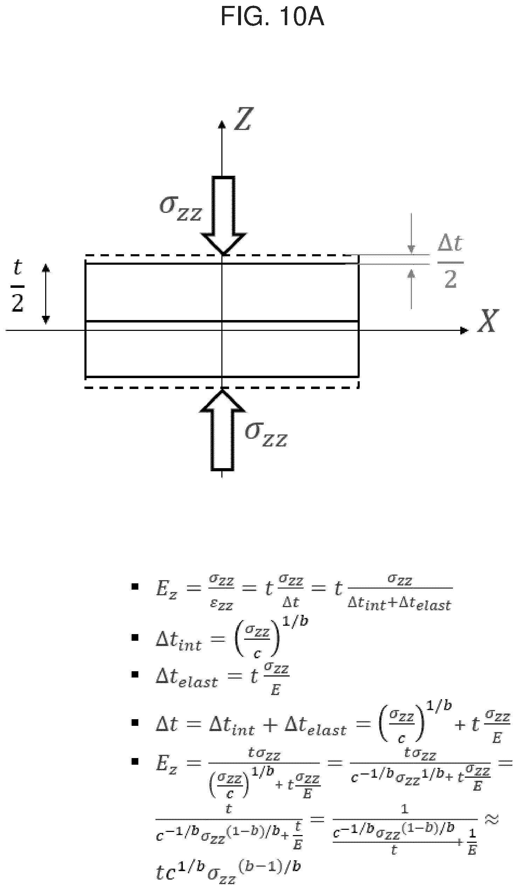

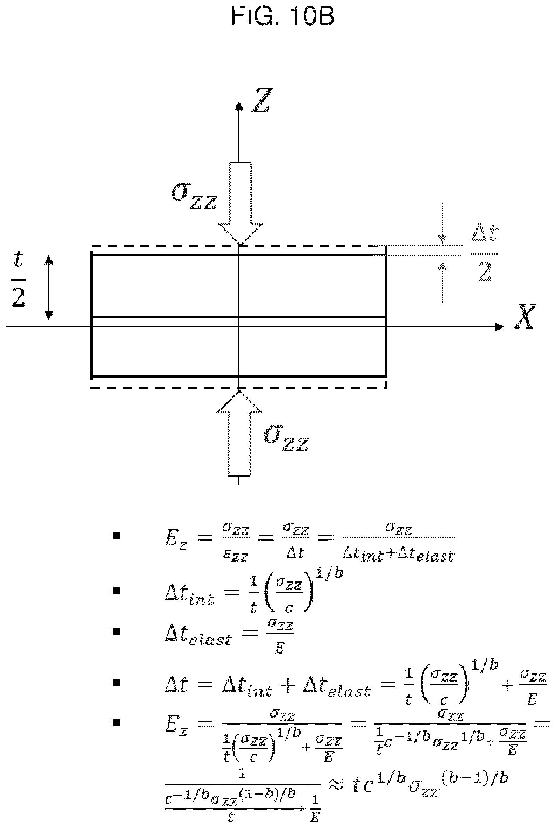

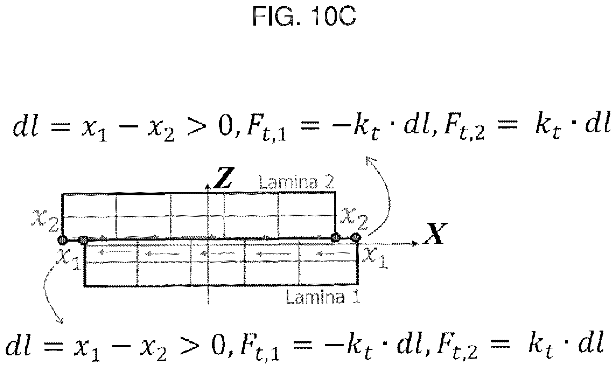

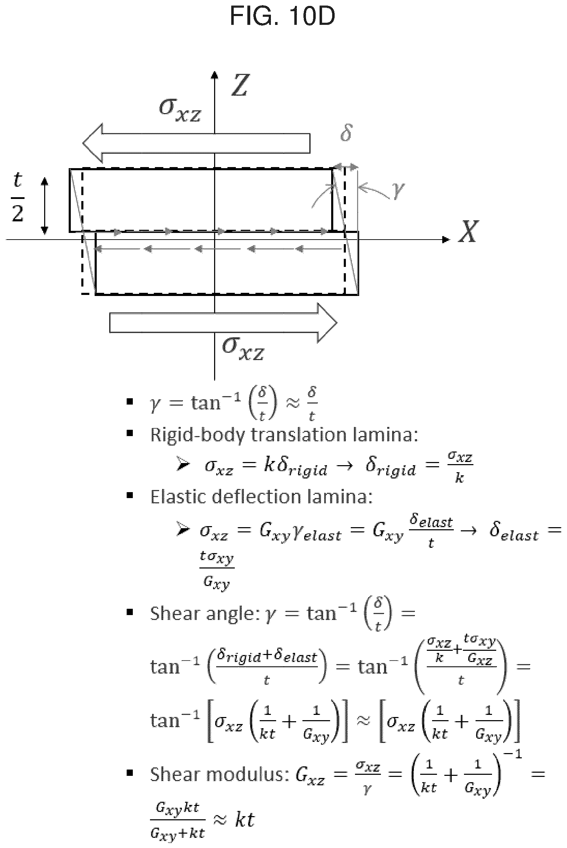

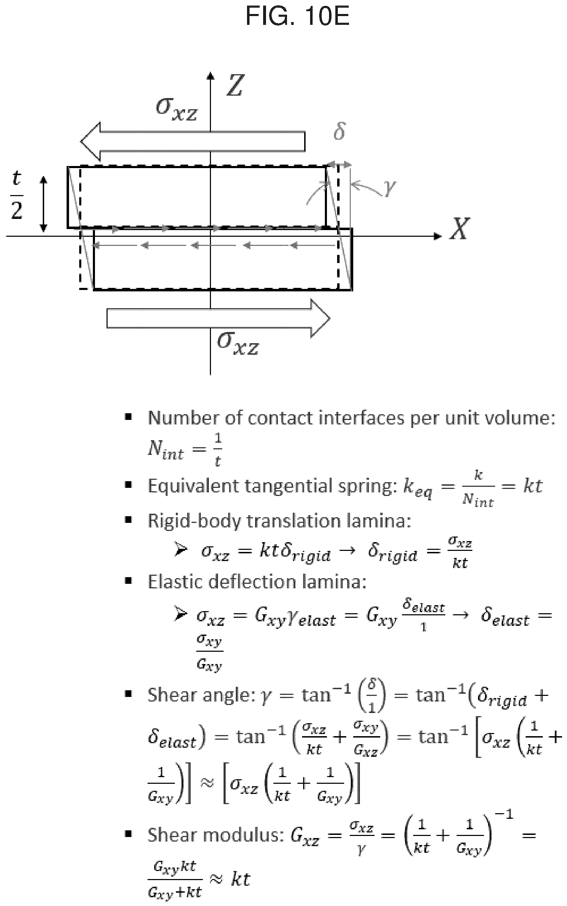

Force, coefficient, and dimension parameters for specific load cases and related functions are illustrated in FIG. 10A to 10E. These functions are suitable for RVE-based simulations of deformations. The load cases, in particular the shear stress are useful to reflect and simulate torsion in a stator core. For the sake of efficiency it may also be efficient and practiced to represent a stator core only by a set or sets of RVE which represent only parts of the volume of the stator core.

**Elements for obtaining equivalent material parameters of a 3D structure**

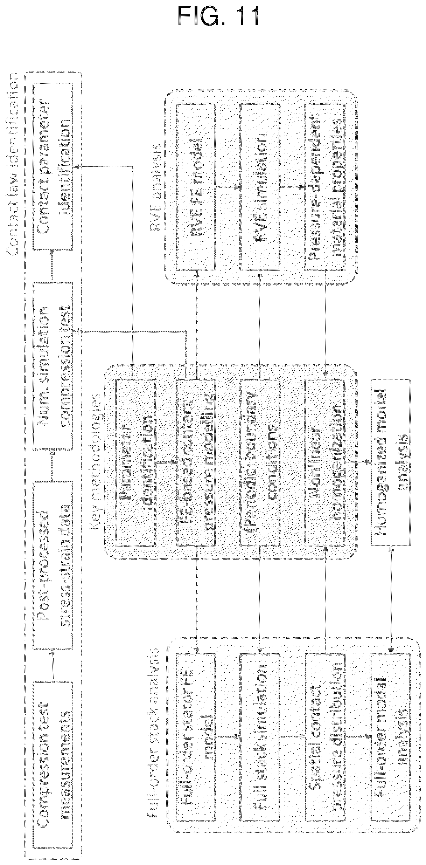

Measures and elements for a method of the invention and variants thereof are described above and related interactions are schematically illustrated in FIG. 11. As illustrated, an element are compression test measurements involving a measurement device. Strain-stress data for above-described curves are post processed according to a further method element for a numeric compression test as another method element. A numeric contact parameter identification, specifically a coefficient identification, makes use of this numeric compression test and is illustrated twice in FIG. 11. The coefficients obtained are used in further method elements for establishing a full-order stator FE model and for establishing a FE model with RVE (representative volume elements). Simulations based on these FE models (a full stack simulation from the full-order stator FE model and a RVE simulation from the FE model with RVE) are determined with boundary conditions. These determinations are simplified based on the periodicity of a 3D structure discussed in the description for FIGS. 1 and 2. Pressure characteristics are taken from the simulations to establish a spatial contact pressure distribution from the full stack simulation and pressure dependent material properties from the RVE simulation. A Nonlinear homogenization replaces partially and preferably entirely elements of the spatial contact pressure distribution by representative volume elements from the RVE simulation for outputting a homogenized modal analysis. A full-order modal analysis may be generated from the spatial contact pressure distribution for comparison with and/or validation of the homogenized modal analysis. Blocks in FIG. 11 can be embodied as method and/or software units except the homogenized modal analysis which corresponds to a data structure and wherein the block 'compression test measurements' involves a measurement device operation.

A particular method and/or software of the invention is composed for the sections 'contact law identification' and 'key methodologies' in FIG. 11. Other blocks interacting with these sections according to FIG. 11 may be those of third party products, e.g. established based on MatLab and/or NASTRAN.

Using above-indicated input parameters, computer-implemented operations as follows may be provided.

For generating a finite element model of a stator's stack of laminar elements:

- computing the geometry based on the geometrical input parameters
- discretizing the computed geometry and generating a finite element model of a single laminar element
- computing a finite element mass and stiffness matrix of the finite element model of the laminar elements (using e.g. Nastran and e.g. imported into Matlab),
- computing the center of gravity of the stack formed of the laminar elements,
- optionally applying axisymmetric boundary conditions by constraint orthogonalization of the stiffness matrix,

- optionally applying the flexible multipoint constraint by constraint orthogonalization of the stiffness matrix,
- optionally computing the normal modes of the stack's finite element model and further optionally graphically representing it.

For a full-order simulation of a subset of lamina indicated in FIG. 3B:

- optionally setting the number of laminar elements temporarily set to a smaller amount than actually present in the simulated stack,
- setting the initial conditions for the contact analysis of the stack,
- computing the external forces (at nodes of the finite element model) applied to upper (and possibly lower) lamina of the stack
- establishing the stiffness matrix of the stack based on the individual stiffness matrix of a single laminar element, i.e. a laminar element type,
- establishing the constraint matrix used to explicitly enforce the algebraic constraint equations,
- numerically solving the static contact equilibrium using a Newton-Raphson scheme,
- converting computed stack displacements to stresses,
- converting the stresses and displacements to contact stresses.

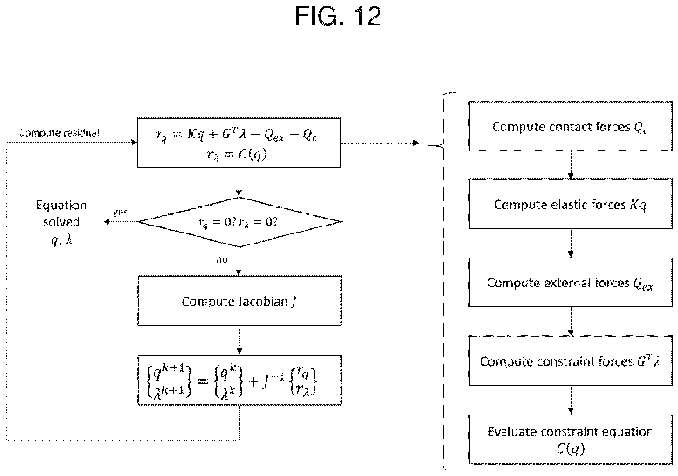

The Newton-Raphson scheme based numeric operation is schematically illustrated in FIG. 12. As illustrated for each parameter of a residual calculation for a Jacobian matrix a computation or evaluation operation is performed in the loop shown in the left side of FIG. 12 and finally a constraint force coefficient $\lambda$ and a constraint equation parameter q is obtained when exiting the loop is triggered by an if/then decision. Computed forces and evaluated equations are indicated in the blocks on the right side of FIG. 12.

For a reduced-order simulation indicated in FIG. 3B:

- establishing a reduced-order model based on the prior full-order contact analysis of a subset of laminar elements,
- resetting the number of laminar elements to the original and actual value for the stack to be simulated,
- computing initial conditions for the reduced-order stack model,
- computing an external load applied to the reduced-order stack model by projection of the full-order external load vector on a basis of reduced dimensions,
- computing a reduced-order stiffness matrix of the stack of reduced-order,
- establishing a reduced-order constraint matrix for imposing constraints on the stack of reduced-order,
- numerically solving the static contact equilibrium, e.g. as illustrated in and described for FIG. 12,
- projecting back the converged reduced-order coordinates to the full-order domain. For post processing simulation results:
- converting the obtained full-order displacements to nodal and elemental stresses,
- computing the contact stresses and center coordinates of all the elements (to allow a homogenization),
- optionally computing the contact stresses on nodal level.

For generating a homogenized finite element model:

- computing a stress interpolant, i.e., based on the contact stresses in the finite elements of the different laminar elements, an interpolating function is generated that returns the contact stress in function of the 3 spatial coordinates x, y, z,
- assigning, based on reference stress in the re-discretized stator model, the equivalent material properties to each element,
- generating with grid data addressed in the description related to FIG. 2 and the homogenized element material properties (e.g. using the MAT11 NASTRAN keyword) a .bdf file of (a segment or single tooth of) the heterogeneously homogenized stator,
- generating a solid finite element model of the complete stack (including all teeth) by discretizing the geometry and assigning grid points and element connectivity relations,
- extending the element material properties computed earlier for a single tooth extended to all teeth, where each teeth is assumed to have the same material properties (this can be adjusted in case different teeth have different contact pressure distributions),

writing, based on these grid points, element connectivities and element material properties, a .bdf file(e.g. using the MAT11 keyword), and reading the corresponding mass and stiffness matrices (e.g. importing into Matlab) and computing Eigenmodes.

For computing homogenized Eigenmodes:

- generating a mass and stiffness matrix of the homogenized finite element model of a single stator tooth (e.g. by calling Nastran and importing the resulting op4-file into Matlab),
- computing Eigenmodes/normal modes of the homogenized finite element model of a single stator tooth (e.g. using Matlab's built-in "eigs" function and storing the resulting Eigenvectors and Eigenfrequencies),
- computing Eigenmodes via importing finite element matrices and for the homogenized finite model of the complete set of stator teeth.

Specifically, the nonlinear contact equilibrium at axial pretension can be determined with the concept from FIG. 12 and the pertaining description to obtain parameters usable for a linearized model. The linearized model may be expressed as

$$\begin{bmatrix} K - \partial Q_c/\partial q & G^T \\ G & 0 \end{bmatrix} \begin{Bmatrix} q \\ \lambda \end{Bmatrix} = 0$$

wherein $\partial Q_c/\partial q$, is the so-called contact Jacobian $J_c$.

After the linearization of the full stator stack model, all degrees of freedom apart from the rotational degrees of freedom can be frozen to conduct an Eigenvalue analysis on the constrained stator stack finite element model.

For a linearized modal analysis:

- optionally adding rotational degrees of freedom to the equilibrium solution (not containing rotational degrees of freedom) for accurate torsional mode evaluation or even a rotational elastic degrees of freedom for each laminar element resulting in an additional deformation mode that corresponds to the first torsional mode of the individual laminar elements for additional torsional flexibility to the stack (selected rotational degrees of freedom being added to a vector of generalized coordinates),
- extending the stiffness matrix corresponding to the extended vector of generalized coordinates,
- establishing a mass matrix corresponding to the extended vector of generalized coordinates (formulated in terms of a number of mass invariants)

linearization of the equations of motion is performed (in case numerical contact Jacobian is selected, the Jacobian is computed based on numerical perturbation of the residual equation or in case analytical contact Jacobian is selected, the analytical contact Jacobian is computed and subtracted from the total linearized stiffness matrix to obtain the complete Jacobian of the system).

For a full-order/non-linear modal analysis:

- solving a full-order Eigenvalue problem involving the complete linearized stator stack,
- computing indices of the translational degrees of freedom related to the Eigenvalue problem within a vector of generalized coordinates,
- computing a full-order stiffness matrix of the full stack of stator laminar elements,
- computing the analytical contact Jacobian for the full stack,
- computing the tangent stiffness matrix (linearized representation) of the full stack,
- computing the mass matrix of the full stack,
- eliminating the translational degrees of freedom from the linearized stiffness and mass matrices,
- computing the Eigenmodes of the linearized full-order stator model with eliminated translational degrees of freedom,
- establishing and solving the Eigenvalue problem involving only the rotational degrees of freedom.

**Further details and specifications**

The concept illustrated in FIG. 11 may particularly work with input parameters which may specify the following aspects:

- the representative volume elements (RVE) from a finite element (FE) model,
- geometry, FE discretization, load conditions, boundary conditions and initial conditions,
- the stator (a lamina 3D structure) with homogenization and model reduction parameters,
- identification of options for the stator,
- algorithm to be used, compression data, geometry, material, FE discretization, boundary and initial conditions,

- parameters of a physical or a numerical contact law, including numerical solution parameters.

5 main Matlab structures may be used to define input parameters, like the following list of parameter categories:

- RVE: RVE parameters
- STATOR: Stator parameters
- SAMPLE: Parameter identification parameters
- CONTACT: Contact parameters
- ANALYSIS: Analysis parameters

Coefficient measurements with e.g. 5 to 15, like e.g. 10 load cycles may involve measurement data post processing in a computer implementation with the following features:

- importing measurement data,
- splitting measurements according to separate loading cycle curves,
- detecting outliers, computing averages of multiple load cycle curves, eliminating an offset,
- computing numerical derivatives to obtain stiffness in function of a compression,
- applying of fitting functions to post-processed data,
- writing post-processed data for the sub-structure to a .csv file for further use, e.g. in executing a homogenization code.

An FE model generation from a tested specimen of a lamina in a measurement may be created according to geometry and above FE parameters in line with the illustration in FIG. 4 and initial conditions for the contact analysis may then be set.

Then a stiffness matrix of the test specimen's FE model may be computed as well as a constraint matrix for imposing the algebraic constraints of the test specimen's FE model.

The above applying fitting functions is e.g. an actual parameter identification conducted based on a selected parameter identification approach: either a direct fit on the measurement data or a numerical simulation of the test experiment.

Mass and stiffness matrices of an FE model may be generated using Nastran.

Then the FE model of the RVE may be created according to input geometry and FE parameters.

Further mass and stiffness matrices, namely of the RVE FE model may be imported into Matlab and two FE models may be generated: one with equal layers, and one where the upper and lower layer have half the layer width.

Here the center of gravity of the RVE FE model is determined; the center of gravity can optionally be used to offset the nodal coordinates, or to place the condensation degree of freedom of a flexible multipoint constraint. For the sake of efficiency rigid-body rotational degrees of freedom of the RVE model are initially set to zero and equivalent material parameters may be computed to obtain a homogenization (even if no homogenized stator FE model is generated yet).

The geometry of the stator lamina may be computed based on the geometrical input parameters to profit from a periodicity-based matrix generation. Specifically, a computed lamina geometry may be discretized and a finite element model of a single lamina generated, e.g. the FE mass and stiffness matrix of the FE model of the lamina is computed (using Nastran) and imported into Matlab. The center of gravity of the lamina may be computed and axisymmetric boundary conditions may be applied by constraint orthogonalization of the stiffness matrix, in particular in response to selecting an implicit inclusion of boundary conditions by an input parameter triggered selection.

A flexible multipoint constraint may be applied by constraint orthogonalization of the stiffness matrix, in particular in response to selecting an implicit inclusion of boundary conditions by an input parameter triggered selection. Normal modes of the lamina's FE model can be computed.

The following operations may serve for obtaining a full order FE model of the stator as a lamina 3D structure:

- setting initial conditions for a contact analysis of the stack of lamina,
- computing external nodal forces applied to upper (and possibly lower) lamina of the stator stack,
- assembling the stiffness matrix of a stack of lamina based on the individual stiffness matrix of a single lamina,
- assembling a constraint matrix specified to explicitly enforce algebraic constraint equations,
- solving a static contact equilibrium numerically using a Newton-Raphson scheme as shown in FIG. 12,
- converting computed stack displacements to stresses on a nodal (contact) level
- converting the computed stack displacements converted to stresses on elemental (RVE) level,
- converting the computed stresses and displacements are to contact stresses on the elemental level,
- converting computed stresses and displacements converted to contact stresses on the nodal level.

The following operations serve for obtaining a full simulation of the sub-structure (vibration of the structure):

- solving the nonlinear contact equilibrium equation as shown in FIG. 12 and constructing a reduced-order model based on the prior full-order contact analysis of a sub-structure of lamina section and setting back (scaling) the number of laminar elements in the section back to the number of laminar elements of the entire 3D structure,
- computing initial conditions for the reduced-order stack model,
- computing the external load applied to the reduced-order stack model by projection of a full-order external load vector on a basis of reduced dimensions,
- computing a reduced-order stiffness matrix of the stack of reduced-order lamina,
- assembling a reduced-order constraint matrix for imposing constraints on a stack represented by the reduced-order lamina,
- solving as illustrated in FIG. 12 the nonlinear static contact equilibrium of the reduced-order model,
- converging reduced-order coordinates are projected back to the full-order domain.

The following operations serve for an efficiency friendly reduce order simulation:

- converting obtained full-order displacements to nodal stresses,
- converting obtained full-order displacements to elemental stresses,
- computing the contact stresses and center coordinates of all the elements (to allow homogenization),

For efficient stiffness matrix elements for the invention's method computing a so-called "stress interpolant" based on the contact stresses associated with FE elements of the different laminar elements in a lamina returns the contact stress in function of the 3 spatial coordinates x, y, z as a tuple. Based on a reference stress in the re-discretized stator model, the equivalent material properties may be assigned to each element (RVE). This allows obtaining the data structure with the stiffness matrix used in the invention's method. Specifically, based on computing, the so-called "stress interpolant" based on the contact stresses in the FE elements of the different laminar elements in a laminar 3D structure with an interpolating function generation (that returns the contact stress in function of the 3 spatial coordinates x, y, z) to have a full-stack/stator and corresponding re-discretized homogenized (interpolated) stress distribution with (e.g. based on the reference stress in the re-discretized stator model) equivalent material properties are assigned to RVEs.

The data structure with the stiffness matrix used in the invention's method relies on grid data (from an FE model) and homogenized element material properties and may be provided profiting from the periodicity, e.g. via using a MAT11 NASTRAN keyword, with a .bdf file of (a segment or single tooth of) the heterogeneously homogenized stator to have a solid FE model of the complete stator (including all teeth) from discretizing the geometry and assigning grid points relating elements (RVE). Thus element material properties computed for a single tooth can be extended to all teeth to profit from a periodicity of material properties (this periodicity can be one for various segments, e.g. different teeth have different contact pressure distributions) and expressed in a .bdf file written using a MAT11 keyword. The corresponding mass and stiffness matrices can be imported into Matlab to compute Eigenmodes/predictions.

The torsional Eigenfrequency is typically one of the lower Eigenfrequencies. Depending on the stiffness of a contact law frequencies switching places with bending modes may be excluded from the prediction, e.g. by selecting only the 4th torsional Eigenfrequency (of a set of computed vibration modes and corresponding Eigenvectors). Computing the Vibration modes/Eigenmodes is also an option of the prediction involved in the method of the invention, i.e. with the homogenized FE model of a complete stator's set of teeth.

The computer program used according to the invention may also include instructions for executing a function to determine and/or set degrees of freedom for obtaining the data structure with the stiffness matrix in a specific manner and corresponding functions may be added to the method of the invention.

An option may be offered to add rotational DOFs to the equilibrium solution not containing rotational DOFs (where no lamina are assumed to rotate when applying an equally distributed axial load to the stack). For accurate torsional mode evaluation, the rotational rigid-body rotational DOF needs to be added. Optionally, also a rotational elastic DOF can be added for each lamina. This will result in an additional deformation mode to be added that corresponds to the first torsional mode of the individual lamina; this will give additional torsional flexibility to the stack, but barely effects the computed first torsional Eigenfrequency.

Specifically, selected rotational DOFs may be effectively added to a vector of generalized coordinates to assemble the stiffness matrix corresponding to the extended vector of generalized coordinates (corresponding to the extended vector of generalized coordinates and formulated in terms of a number of mass invariants and apart the translational and elastic masses of each laminar element also including the inertia of each laminar element).

Depending on a selected Jacobian mode the linearization of the equations of motion may be performed and a numerical contact Jacobian may be computed based on numerical perturbation of the residual equation or an analytical contact Jacobian may be computed and subtracted from the total linearized stiffness matrix to obtain the complete Jacobian of the system.

The rotational linearized stiffness and mass matrices may be generated by retaining only the rotational DOFs from the full-order linearized mass and stiffness matrices. Computing Eigenmodes should include the first torsional Eigenmode and full-order eigenmodes may be reconstructed by overwriting the rotational DOFs in the linearized vector of generalized coordinates by the corresponding DOFs in obtained rotational eigenmodes. The reduced-order coordinates may be transformed back to full-order generalized coordinates.

To solve the full-order Eigenvalue problem involving the complete linearized stator stack translational DOFs of the various laminar elements may be eliminated so as to limit the amount of rigid-body DOFs in the finite element solver / the solving of the Eigenvalue problem. Suitable functions in this context are

- computing indices of the translational DOFs within the vector of generalized coordinates,
- computing the full-order stiffness matrix of the full stack of the stator/lamina,
- computing the analytical contact Jacobian for the full stack of stator lamina,
- computing a related tangent stiffness matrix (linearized representation) of the full stack of stator lamina,
- computing the mass matrix of the full stack of the stator / lamina,
- eliminating the translational DOFs from the linearized stiffness and mass matrices followed by computing Eigenmodes of the linearized full-order stator model (with eliminated translational DOFs and so as to reflect only the rotational DOFs).

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

**Claims**

1. A method for obtaining an electric machine comprising concentrically arranged first and second electromagnetic components for a conversion between mechanical and electric energy being a rotor and a stator, the method comprising

   - a computer-implemented prediction including a prediction of an Eigenfrequency for each of sets of specifications representing options for the first electromagnetic component, selected from at least of material, geometry, and assembling options,
   - a vibration analysis for determining interferences between each Eigenfrequency of the prediction and a response frequency of the second electromagnetic component,
   - a selection of a set of specifications among said sets of specifications based on said vibration analysis, the selected set of specifications corresponding to an Eigenfrequency of the prediction for which suppressed interference is determined in said vibration analysis,
   - assembling the electric machine using the second electromagnetic component and options for the first electromagnetic component corresponding to the selected set of specifications,
   wherein the computer-implemented prediction includes
   - solving the Eigenvalue problem with a finite element solver, an input of which includes a mass matrix and a stiffness matrix and outputs of which include the prediction of the Eigenfrequency for each of the sets of specifications,
   - providing for each of the sets of specifications a data structure containing the mass matrix and the stiffness matrix which comprise equivalent material parameters of a 3D structure formed as a laminate from a laminar element with repeated occurrence of the laminar element along the central axis and with periodicity around a central axis according to a sub-structure periodically occurring in the 3D structure and,
   wherein elements of the stiffness matrix are tuples
   - relating an average or an interpolation of coefficients of deformation within constraints and in response to force increments at contacts between adjacent ones of the laminar element in the 3D structure to volume portions of the 3D structure to provide representative volume elements for a section-based representation of the 3D structure as an orthotropic material and
   - computed with the periodicity and model order reduction with proper orthogonal decomposition on tuples representing the sub-structure.

2. The method according to claim 1, wherein the computer-implemented prediction includes a prediction of an Eigenvector and the outputs of the finite element solver include the prediction of the Eigenvector.

3. The method according to claim 1 or 2, wherein the computer-implemented prediction reflects a rotation around the central axis as the only degree of freedom of the laminar element.

4. The method according any of claims 1 to 3, wherein the first electromagnetic component is a stator, the second electromagnetic component is a rotor, and the 3D structure is a core of the stator and the sub-structure comprises a tooth for carrying a coil or coil portion of the stator.

5. The method according to any of claims 1 to 4, wherein the representative volume elements are representative volume elements of a set of load cases to reflect at least two of vertical, lateral and shear deformation scenarios of the sub-structure.

6. The method according to any of claims 1 to 5, further comprising
establishing elements of the mass matrix and the elements of the stiffness matrix which includes computing the elements of the mass matrix and the elements of the stiffness matrix from the periodicity and model order reduction with proper orthogonal decomposition on tuples of a finite element model representing the sub-structure and defining the contacts.

7. The method according to any of claim 6,
wherein the model order reduction comprises an iterative determination with a calculation of a Jacobian.

8. The method according to claim 6 or 7,
wherein the contacts are node to node or node to surface contacts.

9. The method according to claim 8, wherein the finite element model comprises nodes classified according to portions of the tooth and to positions along a dimension of the center axis, and comprises boundary conditions which include Signorini conditions.

10. The method according to any of claims 6 to 9, wherein the tuples representing the sub-structure include coefficients of a function which is a power function or an exponential function.

11. A use of a functional data structure for the providing of the mass and the stiffness matrix in the method of any of claims 1 to 10, the functional data structure comprising

for a set of specifications, the mass matrix and the stiffness matrix which comprise equivalent material parameters of the 3D structure formed from the laminar element and the periodicity around the central axis,
wherein elements of the stiffness matrix are tuples

- relating an average or an interpolation of coefficients of deformation within constraints and in response to force increments at contacts between adjacent ones of the laminar element in the 3D structure to volume portions of the 3D structure to provide representative volume elements for a section-based representation of the 3D structure as an orthotropic material,

wherein the tuples are computed from the periodicity and model order reduction with proper orthogonal decomposition on tuples representing the sub-structure.

12. A use of a computer program comprising instructions for executing the computer-implemented prediction in the method of any of claims 1 to 10.

**Amended claims in accordance with Rule 137(2) EPC.**

1. A method for obtaining an electric machine comprising concentrically arranged first and second electromagnetic components for a conversion between mechanical and electric energy being a rotor and a stator, the method comprising

- a computer-implemented prediction including a prediction of an Eigenfrequency for each of sets of specifications representing options for the first electromagnetic component, selected from at least of material, geometry, and assembling options,
- a vibration analysis for determining interferences between each Eigenfrequency of the prediction and a response frequency of the second electromagnetic component,

- a selection of a set of specifications among said sets of specifications based on said vibration analysis, the selected set of specifications corresponding to an Eigenfrequency of the prediction for which suppressed interference is determined in said vibration analysis,

- assembling the electric machine using the second electromagnetic component and options for the first electromagnetic component corresponding to the selected set of specifications,

wherein the computer-implemented prediction includes

- solving the Eigenvalue problem with a finite element solver, an input of which includes a mass matrix and a stiffness matrix and outputs of which include the prediction of the Eigenfrequency for each of the sets of specifications,

- providing for each of the sets of specifications a data structure containing the mass matrix and the stiffness matrix which comprise equivalent material parameters of a 3D structure formed as a laminate from a laminar element with repeated occurrence of the laminar element along the central axis and with periodicity around a central axis according to a sub-structure periodically occurring in the 3D structure, and

> wherein the first electromagnetic component is a stator, the second electromagnetic component is a rotor, and the 3D structure is a core of the stator and the sub-structure comprises a tooth for carrying a coil or coil portion of the stator, and
> elements of the stiffness matrix are tuples

- relating an average or an interpolation of coefficients of deformation within constraints and in response to force increments at contacts between adjacent ones of the laminar element in the 3D structure to volume portions of the 3D structure to provide representative volume elements for a section-based representation of the 3D structure as an orthotropic material and

- computed with the periodicity and model order reduction with proper orthogonal decomposition on tuples representing the sub-structure.

2. The method according to claim 1, wherein the computer-implemented prediction includes a prediction of an Eigenvector and the outputs of the finite element solver include the prediction of the Eigenvector.

3. The method according to claim 1 or 2, wherein the computer-implemented prediction reflects a rotation around the central axis as the only degree of freedom of the laminar element.

4. The method according to any of claims 1 to 3, wherein the representative volume elements are representative volume elements of a set of load cases to reflect at least two of vertical, lateral and shear deformation scenarios of the sub-structure.

5. The method according to any of claims 1 to 4, further comprising
establishing elements of the mass matrix and the elements of the stiffness matrix which includes computing the elements of the mass matrix and the elements of the stiffness matrix from the periodicity and model order reduction with proper orthogonal decomposition on tuples of a finite element model representing the sub-structure and defining the contacts.

6. The method according to claim 5,
wherein the model order reduction comprises an iterative determination with a calculation of a Jacobian.

7. The method according to claim 5 or 6,
wherein the contacts are node to node or node to surface contacts.

8. The method according to claim 7, wherein the finite element model comprises nodes classified according to portions of the tooth and to positions along a dimension of the center axis, and comprises boundary conditions which include Signorini conditions.

9. The method according to any of claims 5 to 8, wherein the tuples representing the sub-structure include coefficients of a function which is a power function or an exponential function.

FIG. 1

# FIG. 2

ID = 1010202

ID = 1011302

FIG. 3A

# FIG. 3B

$N_l$ snapshots

$N_l = 20 - 50$

Decreasing singular values

$X = $

$U\Sigma V^* = svd(X)$

$U = $

$\bar{V} \rightarrow \bar{u}_f^i \approx \bar{V} q_f^i$

| Full-order simulation of subset of lamina | Stack lamina deformations in snapshot matrix $X$ | Proper-Orthogonal Decomposition of $X$ | Construct reduced-order model $\bar{V}$ | Reduced-order simulation of full stack of lamina |

FIG. 4

FIG. 5

Set initial / update contact law coefficient(s) $c_1$ and $c_2$

Loop over all stresses

Compute residu
$$\Delta\varepsilon = \varepsilon_{meas} - \varepsilon_{pred}$$

Sum of squares below treshold?

no

Compute Jacobian $J$ and solve $(J^T J)\Delta\beta = J^T \Delta\varepsilon$

FIG. 6

Divide by number of
contact interactions $N_l - 1$

Set initial / update contact
law coefficient(s) $c_1$ and $c_2$

Compute coefficients using
Matlab's `lsqcurvefit.m`

## FIG. 7

```
┌─────────────────────────────┐
│         Input data          │
└─────────────────────────────┘
              │
              ▼
┌─────────────────────────────┐
│     Contact parameter       │
│      identification         │
└─────────────────────────────┘
              │ $c_1, c_2$
              ▼
┌─────────────────────────────┐
│   Full-order stator analysis│
└─────────────────────────────┘
              │ $\sigma_c(x, y, z)$
              ▼
┌─────────────────────────────┐
│         RVE analysis        │
└─────────────────────────────┘
              │ $E, v, G = f(\sigma_c)$
              ▼
┌─────────────────────────────┐
│    Stator homogenization    │
└─────────────────────────────┘
              │ $E, v, G = f(\text{eid})$
              ▼
┌─────────────────────────────┐
│   Generate stator .bdf file │
└─────────────────────────────┘
```

FIG. 8A

FIG. 8B

FIG. 9

# FIG. 10A

$$E_z = \frac{\sigma_{zz}}{\varepsilon_{zz}} = t\frac{\sigma_{zz}}{\Delta t} = t\frac{\sigma_{zz}}{\Delta t_{int} + \Delta t_{elast}}$$

$$\Delta t_{int} = \left(\frac{\sigma_{zz}}{c}\right)^{1/b}$$

$$\Delta t_{elast} = t\frac{\sigma_{zz}}{E}$$

$$\Delta t = \Delta t_{int} + \Delta t_{elast} = \left(\frac{\sigma_{zz}}{c}\right)^{1/b} + t\frac{\sigma_{zz}}{E}$$

$$E_z = \frac{t\sigma_{zz}}{\left(\frac{\sigma_{zz}}{c}\right)^{1/b} + t\frac{\sigma_{zz}}{E}} = \frac{t\sigma_{zz}}{c^{-1/b}\sigma_{zz}^{1/b} + t\frac{\sigma_{zz}}{E}} =$$

$$\frac{t}{c^{-1/b}\sigma_{zz}^{(1-b)/b} + \frac{t}{E}} = \frac{1}{\frac{c^{-1/b}\sigma_{zz}^{(1-b)/b}}{t} + \frac{1}{E}} \approx$$

$$tc^{1/b}\sigma_{zz}^{(b-1)/b}$$

## FIG. 10B

- $E_z = \dfrac{\sigma_{zz}}{\varepsilon_{zz}} = \dfrac{\sigma_{zz}}{\Delta t} = \dfrac{\sigma_{zz}}{\Delta t_{int} + \Delta t_{elast}}$

- $\Delta t_{int} = \dfrac{1}{t}\left(\dfrac{\sigma_{zz}}{c}\right)^{1/b}$

- $\Delta t_{elast} = \dfrac{\sigma_{zz}}{E}$

- $\Delta t = \Delta t_{int} + \Delta t_{elast} = \dfrac{1}{t}\left(\dfrac{\sigma_{zz}}{c}\right)^{1/b} + \dfrac{\sigma_{zz}}{E}$

- $E_z = \dfrac{\sigma_{zz}}{\dfrac{1}{t}\left(\dfrac{\sigma_{zz}}{c}\right)^{1/b} + \dfrac{\sigma_{zz}}{E}} = \dfrac{\sigma_{zz}}{\dfrac{1}{t}c^{-1/b}\sigma_{zz}{}^{1/b} + \dfrac{\sigma_{zz}}{E}} =$

  $\dfrac{1}{\dfrac{c^{-1/b}\sigma_{zz}{}^{(1-b)/b}}{t} + \dfrac{1}{E}} \approx tc^{1/b}\sigma_{zz}{}^{(b-1)/b}$

31

FIG. 10C

$$dl = x_1 - x_2 > 0, F_{t,1} = -k_t \cdot dl, F_{t,2} = k_t \cdot dl$$

$$dl = x_1 - x_2 > 0, F_{t,1} = -k_t \cdot dl, F_{t,2} = k_t \cdot dl$$

# FIG. 10D

- $\gamma = \tan^{-1}\left(\frac{\delta}{t}\right) \approx \frac{\delta}{t}$
- Rigid-body translation lamina:
  - ➢ $\sigma_{xz} = k\delta_{rigid} \rightarrow \delta_{rigid} = \frac{\sigma_{xz}}{k}$
- Elastic deflection lamina:
  - ➢ $\sigma_{xz} = G_{xy}\gamma_{elast} = G_{xy}\frac{\delta_{elast}}{t} \rightarrow \delta_{elast} = \frac{t\sigma_{xy}}{G_{xy}}$
- Shear angle: $\gamma = \tan^{-1}\left(\frac{\delta}{t}\right) = \tan^{-1}\left(\frac{\delta_{rigid}+\delta_{elast}}{t}\right) = \tan^{-1}\left(\frac{\frac{\sigma_{xz}}{k}+\frac{t\sigma_{xy}}{G_{xz}}}{t}\right) = \tan^{-1}\left[\sigma_{xz}\left(\frac{1}{kt}+\frac{1}{G_{xy}}\right)\right] \approx \left[\sigma_{xz}\left(\frac{1}{kt}+\frac{1}{G_{xy}}\right)\right]$
- Shear modulus: $G_{xz} = \frac{\sigma_{xz}}{\gamma} = \left(\frac{1}{kt}+\frac{1}{G_{xy}}\right)^{-1} = \frac{G_{xy}kt}{G_{xy}+kt} \approx kt$

# FIG. 10E

- Number of contact interfaces per unit volume:
$$N_{int} = \frac{1}{t}$$

- Equivalent tangential spring: $k_{eq} = \frac{k}{N_{int}} = kt$

- Rigid-body translation lamina:
  - $\sigma_{xz} = kt\delta_{rigid} \rightarrow \delta_{rigid} = \frac{\sigma_{xz}}{kt}$

- Elastic deflection lamina:
  - $\sigma_{xz} = G_{xy}\gamma_{elast} = G_{xy}\frac{\delta_{elast}}{1} \rightarrow \delta_{elast} = \frac{\sigma_{xy}}{G_{xy}}$

- Shear angle: $\gamma = \tan^{-1}\left(\frac{\delta}{1}\right) = \tan^{-1}\left(\delta_{rigid} + \delta_{elast}\right) = \tan^{-1}\left(\frac{\sigma_{xz}}{kt} + \frac{\sigma_{xy}}{G_{xz}}\right) = \tan^{-1}\left[\sigma_{xz}\left(\frac{1}{kt} + \frac{1}{G_{xy}}\right)\right] \approx \left[\sigma_{xz}\left(\frac{1}{kt} + \frac{1}{G_{xy}}\right)\right]$

- Shear modulus: $G_{xz} = \frac{\sigma_{xz}}{\gamma} = \left(\frac{1}{kt} + \frac{1}{G_{xy}}\right)^{-1} = \frac{G_{xy}kt}{G_{xy}+kt} \approx kt$

FIG. 11

# FIG. 12

Europäisches
Patentamt

European
Patent Office

Office européen
des brevets

# EUROPEAN SEARCH REPORT

**Application Number**

EP 24 20 2228

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MILLITHALER P. ET AL: "Structural dynamics of electric machine stators: Modelling guidelines and identification of three-dimensional equivalent material properties for multi-layered orthotropic laminates", JOURNAL OF SOUND AND VIBRATION, vol. 348, 24 March 2015 (2015-03-24), pages 185-205, XP093251387, Amsterdam , NL ISSN: 0022-460X, DOI: 10.1016/j.jsv.2015.03.010 Retrieved from the Internet: URL:https://www.sciencedirect.com/science/article/pii/S0022460X1500228X> | 11,12 | INV. G06F30/23 H02P9/00 ADD. G06F119/10 G06F119/14 |
| Y | * abstract * * section 1 par.1 * * section 5.1 * * page 193, paragraph 1-2; figure A1 * * seciton 5.5 * * table 2 * * section 3.1 * * page 192, last paragraph - page 193, paragraph 1 * * page 187, paragraph 2; figure 11 * * section 3 par.3; figure 14 * * section 2; figures 1-4 * * the whole document * | 1-10 | |

-----

-/--

**TECHNICAL FIELDS SEARCHED (IPC)**

G06F
H02P

The present search report has been drawn up for all claims

| Place of search | Date of completion of the search | Examiner |
|---|---|---|
| Munich | 20 February 2025 | Dapp, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt

European
Patent Office

Office européen
des brevets

# EUROPEAN SEARCH REPORT

**Application Number**

EP 24 20 2228

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MA HAORAN ET AL: "Stator Design Method in Rotor-Stator Interference Flow Fields in Order to Suppress the Vibration of Bladed Disks", APPLIED SCIENCES, vol. 12, no. 17, 25 August 2022 (2022-08-25), pages 1-19, XP093251448, ISSN: 2076-3417, DOI: 10.3390/app12178495 Retrieved from the Internet: URL:https://www.mdpi.com/2076-3417/12/17/8495> * abstract * * sections 2.3 and 3 * * the whole document * | 1-10 | |
| Y | GASTALDI CHIARA ET AL: "Jacobian projection reduced-order models for dynamic systems with contact nonlinearities", MECHANICAL SYSTEMS AND SIGNAL PROCESSING, vol. 100, 5 August 2017 (2017-08-05), pages 550-569, XP093251389, AMSTERDAM, NL ISSN: 0888-3270, DOI: 10.1016/j.ymssp.2017.07.049 Retrieved from the Internet: URL:https://www.sciencedirect.com/science/article/pii/S0888327017304193> * abstract * * page 552, paragraph 2 * * section 2.2 * * the whole document * | 9,10 | TECHNICAL FIELDS SEARCHED (IPC) |

-/--

The present search report has been drawn up for all claims

| Place of search | Date of completion of the search | Examiner |
|---|---|---|
| Munich | 20 February 2025 | Dapp, Wolfgang |

Europäisches
Patentamt

European
Patent Office

Office européen
des brevets

# EUROPEAN SEARCH REPORT

**Application Number**

EP 24 20 2228

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Baloglu Maximilian Volkan: "Identifikation eines Materialmodells geschichteter Blechpakete im Rahmen einer Zwei-Skalen-Modellierung", , 12 May 2021 (2021-05-12), pages 1-244, XP093251388, Retrieved from the Internet: URL:https://open.fau.de/items/e3d0a9d8-dd29-4c57-8846-b2ef446946cd * abstract * * section 3.3 * * section 3.5.1 * * the whole document * ----- | 7 | |
| | | | **TECHNICAL FIELDS SEARCHED (IPC)** |

The present search report has been drawn up for all claims

| Place of search | Date of completion of the search | Examiner |
|---|---|---|
| Munich | 20 February 2025 | Dapp, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BALOGLU, M. V.** Identifikation eines Materialmodells geschichteter Blechpakete im Rahmen einer Zwei-Skalen-Modellierung. Friedrich-Alexander-Universität, 2021
- **BALOGLU, M. V.** ; **ZIEGLER, M.** ; **FRANKE, J.** ; **WILLNER, K.** Determination of equivalent transversely isotropic material parameters for sheet-layered lamination stacks. *Mechanical Systems and Signal Processing*, 2020, vol. 145, 106915
- **BALOGLU, M. V.** ; **WILLNER, K.** Material modelling of a sheet-layered lamination stack by homogenization. *PAMM*, 2016, vol. 16 (1), 509-510
- **BALOGLU, M. V.** ; **WILLNER, K.** Constitutive modelling of sheet-layered lamination stacks. *PAMM*, 2018, vol. 18 (1), e201800162
- **BALOGLU, M. V.** ; **WILLNER, K.** Influence of the constitutive contact law on the anisotropic material parameters of sheet-layered lamination stacks. *2018 8th International Electric Drives Production Conference (EDPC)*, December 2018, 1-6
- **BALOGLU, M. V.** ; **WILLNER, K.** Identifying equivalent transversely isotropic material parameters for full-surface bonded sheet-layered lamination stacks. *PAMM*, 2021, vol. 20 (1), e202000109
- **BALOGLU, M. V.** ; **WILLNER, K.** Numerical homogenization and simulation of a lamination stack. *2016 6th International Electric Drives Production Conference (EDPC)*, November 2016, 67-72
- **LUCHSCHEIDER, V.** Experimentelle und numerische Identifikation eines homogenisierten Materialmodells für Blechpakete elektrischer Maschinen. Friedrich-Alexander-Universität, 2016
- **LUCHSCHEIDER, V.** ; **WILLNER, K.** ; **MAIDORN, M.** A material model for lamination stacks based on rough contacts. *2014 4th International Electric Drives Production Conference (EDPC)*, September 2014, 1-6
- **LUCHSCHEIDER, V.** ; **MAIDORN, M.** ; **WILLNER, K.** Computation of the effective lamination stack's behavior considering the contact simulation with a multi-scale homogenization. *Proceedings of the 11th World Congress on Computational Mechanics*, July 2014
- **LUCHSCHEIDER, V.** ; **WILLNER, K.** ; **MAIDORN, M.** Development of a model to describe the stiffness of an electric motor lamination stack. *2012 2nd International Electric Drives Production Conference (EDPC)*, October 2012, 1-5
- Dynamic behaviour of electric machine stators, Modelling guidelines for efficient finite-element simulations and design specifications to reduce noise. **MILLITHALER, P.** PhD dissertation. Univ. Franche-Comté, 2015
- **MILLITHALER, P.** ; **SADOULET-REBOUL, É.** ; **OUISSE, M.** ; **DUPONT, J. B.** ; **BOUHADDI, N.** Structural dynamics of electric machine stators: Modelling guidelines and identification of three-dimensional equivalent material properties for multilayered orthotropic laminates. *Journal of Sound and Vibration*, 2015, vol. 348, 185-205
- **MOLINA, A. J. C.** Computational homogenization for multi scale finite element simulation. Swansea University, 2007
- **MIEHE, C.** Computational micro-to-macro transitions for discretized micro-structures of heterogeneous materials at finite strains based on the minimization of averaged incremental energy. *Computer methods in applied mechanics and engineering*, 2003, vol. 192 (5-6), 559-591
- **NGUYEN, V. D.** Computational homogenization of cellular materials capturing micro-buckling, macro-localization and size effects. *PhD dissertation*, 2014